# EUROPÄISCHE PATENTSCHRIFT

(11) **EP 1 293 691 B1**
(45) Veröffentlichungstag und Bekanntmachung des Hinweises auf die Patenterteilung: **05.03.2008**
(21) Anmeldenummer: 02405791.1
(22) Anmeldetag: 11.09.2002
(51) Int. Cl.: F16D 3/06, B25J 17/02

(54) **Teleskopische Vorrichtung zur Übertragung von Drehmomenten**
Telescopic device for transmitting a torque
DIspositif télescopique de transmission d'un couple

(30) Priorität: 17.09.2001 CH 17092001
(43) Veröffentlichungstag der Anmeldung: 19.03.2003
(73) Patentinhaber: ROBERT BOSCH GMBH, 70442 Stuttgart (DE)
(72) Erfinder: Schuler, Hans Andrea, 8200 Schaffhausen (CH)
(74) Vertreter: Clerc, Natalia

(56) Entgegenhaltungen:
- EP-A- 0 747 605
- WO-A-01/60571

## Beschreibung

### Technisches Gebiet

Die Erfindung betrifft eine Vorrichtung zur Übertragung von Drehmomenten gemäss Oberbegriff des Patentanspruches 1. Die Vorrichtung eignet sich insbesondere als längenverstellbare vierte Achse eines nach dem Deltaprinzip arbeitenden Roboters.

### Stand der Technik

Aus WO 00/35640, EP-A-1'129'829 sowie EP-A-0'250'470 sind derartige Vorrichtungen bekannt. Sie sind in einem Roboter eingesetzt, welcher nach dem sogenannten Deltaprinzip arbeitet. Dieser Delta-Roboter eignet sich zum geführten und präzisen Bewegen eines Gegenstandes im dreidimensionalen Raum. Der Roboter weist ein Basiselement und ein bewegbares Trägerelement auf, an welchem auf den jeweiligen Anwendungsbereich angepasste Greifmittel angeordnet sind. Drei motorisch angetriebene, bewegbare Steuerarme und eine motorisch angetriebene Teleskopachse sind an ihren entgegengesetzten Enden mit dem Basiselement und dem Trägerelement verbunden. Die Steuerarme bewegen das Trägerelement und tragen auch den Mehrteil des Gewichtes. Die Teleskopachse, auch vierte Achse genannt, ist mit dem Greifmittel verbunden. Mit Hilfe dieser vierten Achse lässt sich das Greifmittel um eine Achse drehen. Die vierte Achse dient somit als Vorrichtung zur Übertragung von Drehmomenten und Drehwinkel vom Motor zum Greifmittel. Diese Übertragung muss sehr genau und präzis erfolgen, sollte jedoch trotzdem im dreidimensionalen Raum ausgeführt werden können. Deshalb ist die vierte Achse als Teleskop mit zwei konzentrisch ineinander angeordneten Rohren ausgebildet. Durch Verschiebung der Rohre relativ zueinander lässt sich der Abstand vom Basiselement zum Trägerelement variieren. Typische Verschiebegeschwindigkeiten des Teleskops liegen dabei bei 10 m/s.

Auch WO 99/67066 beschreibt einen Roboter mit einem längenveränderbaren Arm, welcher jedoch um zwei Achsen schwenkbar ist. Der Arm ist verdrehsicher in einem Lager verschiebbar.

In EP-A-0'46'531 ist ferner eine Teleskopschiene offenbart, welche dreiteilig aufgebaut ist. Zwei Aussenschienen sind durch eine relativ zu einer Innenschiene unverschieblich gelagerte Rolle miteinander synchronisiert. Die Rolle liegt an einer der Aussenschienen unmittelbar an und wirkt mit ihrer Lauffläche auf die andere Aussenschiene. Die drei Schienen können nebeneinander angeordnet sein.

Diese Teleskopachsen oder -schienen gemäss dem Stand der Technik weisen den Nachteil auf, dass sie sich für sogenannte Wash-Down-Konstruktionen mässig eignen. Diese Konstruktionen sollten sich so einfach wie möglich reinigen lassen, ohne dass einzelne Teile auseinandergenommen werden müssen. Diese Anforderung muss insbesondere beim Einsatz derartiger Roboter im Lebensmittelbereich oder in anderen hygienetechnisch diffizilen Bereichen erfüllt sein. Die konzentrisch verschiebbaren Rohre verunmöglichen jedoch eine vollständige Reinigung.

WO 01/60571 offenbart einen Delta-Roboter mit einer teleskopartigen vierten Achse, welche einfach zu reinigen sein soll. Die Teleskoparme bestehen aus mehreren parallel zueinander angeordneten Rohren, welche an beiden Enden in einer gemeinsamen Platte gelagert sind. Je eine Platte ist dabei von den Rohren des anderen Teleskoparmes gleitend durchsetzt. Die Richtung des einleitenden Drehmomentes ist somit identisch mit der Richtung des ausleitenden Drehmomentes. Diese Vorrichtung weist den Nachteil auf, dass sie relativ kompliziert aufgebaut und entsprechend schwer ist. Zudem erschwert die Vielzahl der Stäbe nach wie vor die Reinigung.

Eine Vorrichtung der eingangs genannten Art ist aus EP-A-0 747 605 bekannt.

### Darstellung der Erfindung

Es ist Aufgabe der Erfindung, eine Vorrichtung zur Übertragung von Drehmomenten, insbesondere für Delta-Roboter, zu schaffen, welche eine verbesserte Reinigung ermöglicht und einen optimalen Kraftfluss sowie eine hohe Steifigkeit aufweist.

Diese Aufgabe löst eine Vorrichtung mit den Merkmalen des Patentanspruches 1.

Die erfindungsgemässe Vorrichtung besteht aus zwei Stäben, welche in Gleitlagern geführt parallel zueinander verschiebbar sind und mit Gelenkköpfen zur Einleitung eines einleitenden und zur Ausleitung eines ausleitenden Drehmomentes verbunden sind. Dabei sind die Stäbe so angeordnet, dass das einleitende Drehmoment eine Richtung aufweist, welche parallel versetzt zu einer Richtung des ausleitenden Drehmomentes verläuft.

Dies ermöglicht eine parallel versetzte Anordnung der Stäbe, welche trotzdem längenveränderbar ist. Die parallel versetzte Anordnung ermöglicht, dass sich die Stäbe im Wash-Down Prinzip, das heisst, ohne Auseinandernehmen, auf einfache Art und Weise vollständig reinigen lassen.

Die parallel versetzte Anordnung erlaubt es zudem, relativ kurze Gleitlager zu verwenden. Dadurch werden Toträume, das heisst nicht direkt zugängliche und somit schlecht zu reinigende Bereiche, minimiert.

Die parallel versetzte Anordnung ermöglicht zudem, dass die Stäbe einfache Formen aufweisen können, so dass sich ihre Oberflächen gut reinigen lassen.

Erfindungsgemäß besteht die Vorrichtung aus zwei Stäben, zwei Gleitlagerelementen und zwei Gelenkköpfen. Durch die geringe Anzahl Teile ist wiederum die Reinigung erleichtert. Zudem ist jedoch auch das Gewicht reduziert, was sich insbesondere bei der Leistung der Roboter positiv auswirkt. Des weiteren werden die Herstellungskosten minimiert, insbesondere wenn die Stäbe und Gleitlagerelemente jeweils identisch ausgebildet sind.

Sind die Stäbe verdrehsicher gelagert, so wird das einleitende Drehmoment bis zum Lagerelement als reine Torsion übertragen. Im Mittelteil ergibt sich eine Biegetorsion mit grossem Torsiönsanteil. Im Bereich des ausleitenden Drehmomentes ist nur noch Torsion vorhanden. Die erfindungsgemässe Vorrichtung reduziert somit die Biegebeanspruchung der Stäbe. Da Rohre und Stäbe in Bezug auf Biegung immer schwächer sind als auf Torsion, ist der Kraftfluss optimiert. Die Vorrichtung weist hohe Steifigkeitswerte auf.

Weitere vorteilhafte Ausführungsformen gehen aus den abhängigen Patentansprüchen hervor.

Diese Vorrichtung eignet sich als vierte Achse für den eingangs erwähnten Delta-Roboter. Andere Anwendungsbereiche, in welchem ein Drehmoment präzise übertragen werden muss, sind jedoch möglich.

### Kurze Beschreibung der Zeichnung

Im folgenden wird der Erfindungsgegenstand anhand eines bevorzugten Ausführungsbeispieles, welches in der beiliegenden Zeichnung dargestellt ist, erläutert. Es zeigen:
- Figur 1: eine perspektivische Darstellung eines Delta-Roboters mit der erfindungsgemässen Vorrichtung;
- Figur 2: eine perspektivische Darstellung einer erfindungsgemässen Vorrichtung im vollständig ausgezogenen Zustand;
- Figur 3: eine Darstellung der Vorrichtung gemäss Figur 2 im eingefahrenen Zustand;
- Figur 4a: einen Querschnitt durch einen runden Stab und
- Figur 4b: einen Querschnitt durch einen ovalen Stab.

### Wege zur Ausführung der Erfindung

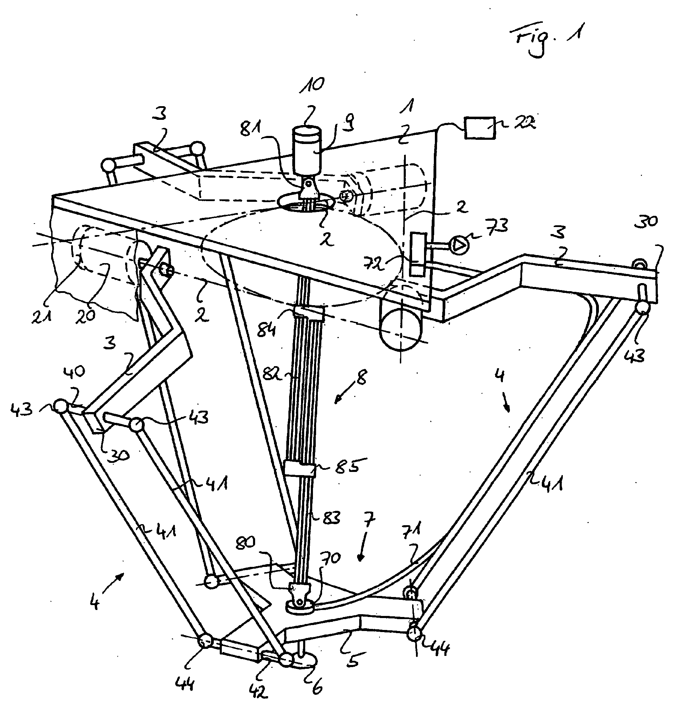

In Figur 1 ist ein Delta-Roboter dargestellt. Bis auf eine erfindungsgemäss veränderte vierte Achse entspricht er dem eingangs erwähnten Delta-Roboter. Er wird deshalb im folgenden nur noch kurz beschrieben.

Der Roboter weist ein plattenförmiges Basiselement 1 auf, an welchem drei Achsen 2 drehbar gelagert sind. Die Achsen 2 sind von Servomotoren 20 angetrieben, welche mit je einem Winkelgeber 21 verbunden sind. Die Servomotoren 20 sind mit einer gemeinsamen Kontroll- und Steuereinheit 22 verbunden.

Die Achsen 2 sind in einer gemeinsamen Fläche angeordnet und bilden zusammen ein Dreieck. An jeder Achse 2 ist ein Steuerarm 3 befestigt, welcher mit der Achse 2 bewegbar ist. Jeder Steuerarm 3 weist ein freies Ende 30 auf, welches mit einem Verbindungselement 4 gelenkig verbunden ist. Hierfür ist das freie Ende 30 von einer oberen Querstange 40 durchsetzt, welche lagefixiert darin gehalten ist. Die obere Querstange 40 ist über obere Gelenkköpfe 43 mit zwei Verbindungsstangen 41 verbunden. Die Verbindungsstangen 41 sind über untere Gelenkköpfe 44 an zwei Enden einer unteren Querstange 42 angebracht. Diese untere Querstange 42 ist lagefixiert in einem Trägerelement 5 angeordnet, wobei sie dieses mit ihren beiden Enden durchsetzt.

Das Trägerelement 5 ist somit mittels dieser Steuerarme 3 von diesen getragen und mittels diesen im dreidimensionalen Raum bewegbar. Das Trägerelement 5 ist plattenförmig ausgebildet. In seiner Mitte und auf seiner Unterseite ist ein Greifelement 6 angeordnet. Die Art des Greifelementes 6 hängt vom Einsatzbereich ab. Mittels dieses Greifelementes 6 ergreift der Roboter ein Produkt und transportiert es an eine gewünschte Stelle. Im hier dargestellten Beispiel handelt es sich um einen Saugnapf.

Im hier dargestellten Beispiel ist das Greifelement 6 mit einer pneumatischen Saugvorrichtung 7 versehen. Auf dem Trägerelement 5 ist ein Verbindungsring 70 angeordnet, welcher einerseits mit dem Saugnapf und andererseits mit einem Schlauch 71 verbunden ist. Der Schlauch 71 ist mit einem Ventil 72 und einer Vakuumpumpe 73 verbunden.

Der Delta-Roboter weist eine längenveränderbare vierte Achse 8 auf. Diese vierte Achse 8 bildet die Vorrichtung zur Übertragung von Drehmomenten, wobei ein einleitendes Drehmoment im Bereich des Basiselementes 1 in ein ausleitendes Drehmoment im Bereich des bewegbaren Trägerelementes 5 übertragen wird.

Die vierte Achse 8 ist zwischen dem Basiselement 1 und dem Trägerelement 5 angeordnet, wobei sie eine Öffnung im Basiselement 1 durchsetzt. Sie ist an einem Ende über ein unteres Gelenk, hier ein Kardangelenk 80, mit dem Greifelement 6 verbunden. Ferner ist sie an einem zweiten Ende über ein oberes Gelenk, hier ebenfalls ein Kardangelenk 81, mit einem Schaft eines Servomotors 9 verbunden. Dieser Servomotor 9 ist wiederum mit einem Winkelgeber 10 versehen. Die vierte Achse 8 dient, wie bereits eingangs erwähnt, zur Drehung des Greifelementes 6 im dreidimensionalen Raum.

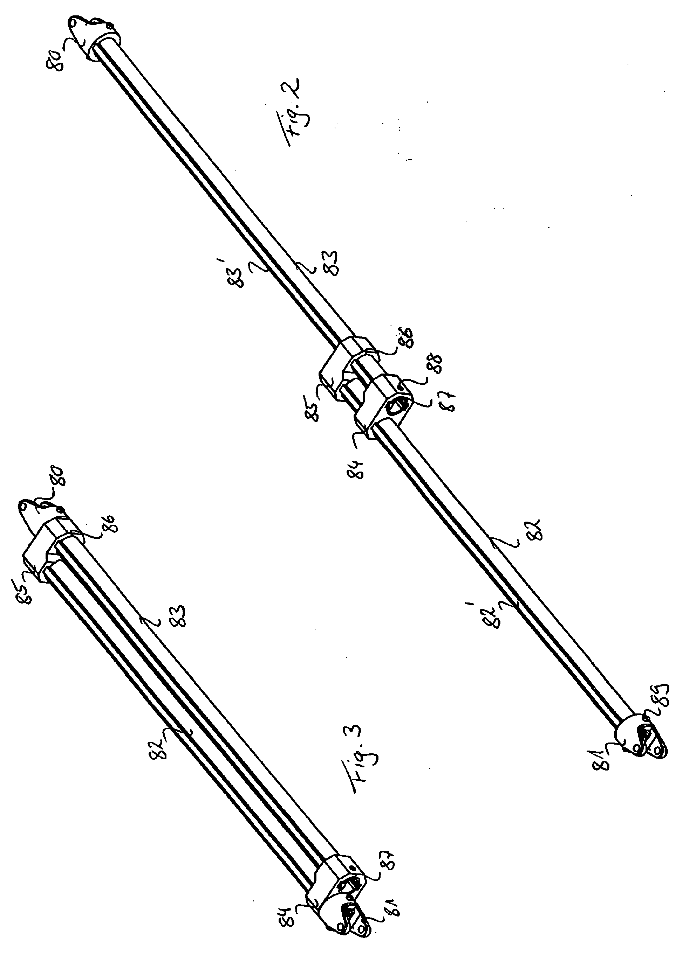

Die erfindungsgemässe vierte Achse 8 ist in den Figuren 2 bis 4 genauer dargestellt. Sie weist mehrere, hier zwei Stäbe 82,83 auf. Die Stäbe 82,83 sind in einem Gleitlager 84,85 geführt parallel zueinander verschiebbar. Dabei sind die Stäbe 82,83 so angeordnet, dass ein über den oberen Gelenkkopf 81 eingeleitetes Drehmoment eine Richtung aufweist, welche parallel versetzt zur Richtung des über den unteren Gelenkkopf 80 ausgeleiteten Drehmoments verläuft.

Dies wird im hier dargestellten Beispiel erreicht, indem das Gleitlager 84,85 drehsteif ausgebildet ist, so dass das einleitende Drehmoment vom ersten oberen Stab 82 über das Gleitlager 84,85 auf den zweiten unteren Stab 83 übertragen wird.

Das Gleitlager besteht aus mehreren, hier zwei Gleitlagerelementen 84,85. Jedes Gleitlagerelement 84,85 weist eine Durchgangsöffnung 86 und eine Aufnahmeöffnung 87 auf. Jede Durchgangsöffnung 86 ist von je einem der zwei Stäbe 82,83 durchsetzt. So durchsetzt der erste Stab 82 die Durchgangsöffnung 86 des ersten Gleitlagerelementes 84 und der zweite Stab 83 diejenige des zweiten Gleitlagerelementes 85. In den Aufnahmeöffnungen 87 sind jeweils das Ende des anderen Stabes drehfest und unverschiebbar gehalten. Das heisst, das Ende des ersten Stabes 82 ist in der Aufnahmeöffnung 87 des zweiten Gleitlagerelementes 85 angeordnet. Die Fixierung erfolgt beispielsweise mittels ersten Schrauben 88. Durch diese Anordnung lassen sich die Stäbe 82,83 innerhalb der zugehörigen Gleitlagerelemente 84,85 verschieben, wie dies in den Figuren 2 und 3 sichtbar ist.

An den freien Enden der Stäbe 82,83 sind Teile der Kardangelenke 80,81 drehfest angebracht, um das obere und untere Gelenk zu bilden. Auch dies erfolgt vorzugsweise mittels zweiten Schrauben 89.

Die Stäbe 82,83 sind im hier dargestellten Beispiel als Rohre ausgebildet. Sie sind vorzugsweise aus Aluminium oder einem faserverstärkten Kunststoff gefertigt. Insbesondere eignet sich ein kohlefaserverstärkter Kunststoff. Die Verwendung von faserverstärktem Kunststoff erhöht die spezifische Steifigkeit der Vorrichtung.

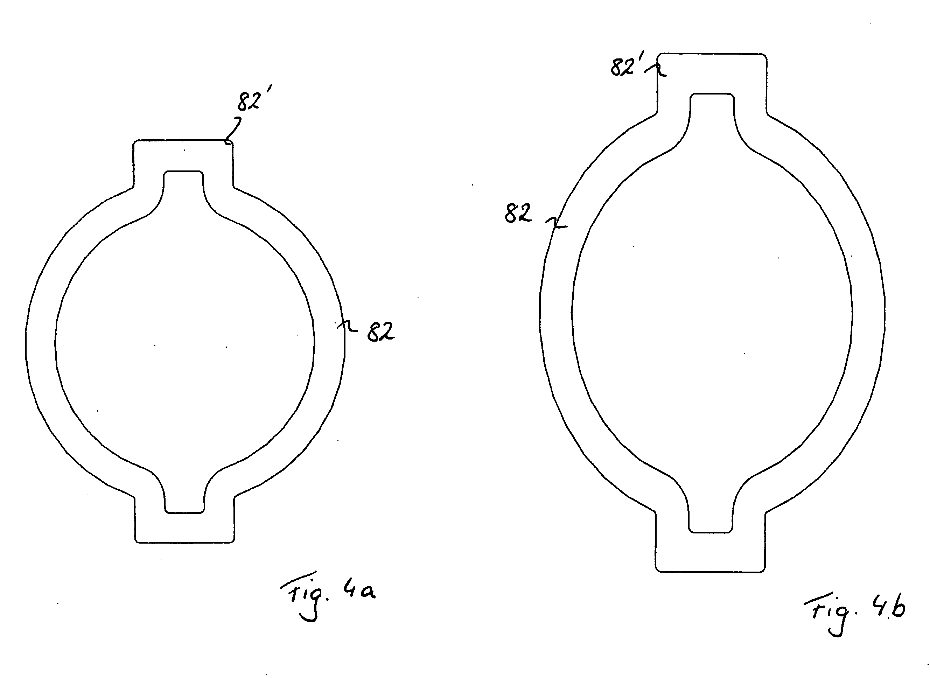

Um die verdrehsichere Lagerung zu gewährleisten, weisen die Stäbe 82,83 einen nicht kreisförmigen Querschnitt auf. Der Querschnitt weist mindestens eine nach aussen vorstehende Nase 82', 83' auf, wobei die Grundform rund sein kann, wie dies in Figur 4a sichtbar ist. Vorzugsweise weist er jedoch zusätzlich zur Nase 82', 83' eine ovale Grundform auf, wie dies in Figur 4b dargestellt ist. Vorzugsweise sind zwei Nasen 82', 83' vorhanden, welche diagonal entgegengesetzt zueinander angeordnet sind und sich in Form je eines Keilprofils über mindestens annähernd die gesamte Länge des Stabes 82, 83 erstrecken. Es ist jedoch auch möglich, dass mehrere Nasen vorhanden sind, welche kreissymmetrisch über den Umfang verteilt angeordnet sind.

Vorzugsweise sind die Stäbe 82,83 und die Gleitlagerelemente 84,85, hier auch die Kardangelenke 80,81, identisch aufgebaut, so dass eine vollständig symmetrische Anordnung vorhanden ist. Es ist jedoch auch möglich, unterschiedliche Elemente einzusetzen. Insbesondere können die Stäbe 82,83 unterschiedlich lang sein.

Die Gleitlagerelemente 84,85 sind prismatisch und somit relativ kurz ausgebildet. Vorzugsweise ist ihre gesamte Länge, welche auch der Länge des durch sie gebildeten Lagers entspricht, mindestens annähernd gleich dem Durchmesser der sie durchsetzenden Stäbe 82,83. Auch der Abstand der Stäbe 82,83 zueinander ist relativ klein. Vorzugsweise ist er mindestens annähernd gleich dem Querschnitt eines Stabes 82,83.

Die erfindungsgemässe Vorrichtung ermöglicht eine präzise Übertragung von Drehmomenten, ist aber trotzdem einfach aufgebaut, weist eine hohe Biegesteifigkeit und ein relativ geringes Eigengewicht auf und lässt sich im Wash-Down-Verfahren gut reinigen.

### Bezugszeichenliste

- 1: Basiselement
- 2: Achse
- 20: Servomotor
- 21: Winkelgeber
- 22: Kontroll- und Steuereinheit
- 3: Steuerarm
- 30: freies Ende
- 4: Verbindungselement
- 40: Obere Querstange
- 41: Verbindungsstange
- 42: Untere Querstange
- 43: Oberer Gelenkkopf
- 44: Unterer Gelenkkopf
- 5: Trägerelement
- 6: Greifelement
- 7: Pneumatische Saugvorrichtung
- 70: Verbindungsring
- 71: Schlauch
- 72: Ventil
- 73: Vakuumpumpe
- 8: Längenveränderbare vierte Achse
- 80: Unteres Kardangelenk
- 81: Oberes Kardangelenk
- 82: Erster Stab
- 82': erstes Keilprofil
- 83: Zweiter Stab
- 83': zweites Keilprofil
- 84: Erstes Gleitlager
- 85: Zweites Gleitlager
- 86: Durchgangsöffnung
- 87: Aufnahmeöffnung
- 88: Erste Schraube
- 89: Zweite Schraube
- 9: Servomotor
- 10: Winkelgeber

## Patentansprüche

1. Längenveränderbare Vorrichtung zur Übertragung von Drehmomenten, bestehend aus:
einem ersten Stab (82) und einem zweiten Stab (83), wobei der erste und der zweite Stab (82,83) geführt parallel zueinander verschiebbar sind, und
mit Gelenkköpfen (80,81) zur Einleitung eines einleitenden Drehmomentes und zur Ausleitung eines ausleitenden Drehmomentes, wobei ein erster Gelenkkopf (80) mit dem ersten Stab (82) verbunden und einen zweiter Gelenkkopf (81) mit dem zweiten Stab (83) verbunden ist,
**dadurch gekennzeichnet, dass**
der erste und zweite Stab (82,83) so angeordnet sind, dass das einleitende Drehmoment eine Richtung aufweist, welche parallel versetzt zur Richtung des ausleitenden Drehmomentes verläuft, wobei das einleitende Drehmoment vom ersten Stab (82) über ein drehsteif ausgebildetes Gleitlager (84,85) auf den zweiten Stab (83) übertragbar ist.

2. Vorrichtung nach Anspruch 1, **dadurch gekennzeichnet, dass** das Gleitlager zwei Gleitlagerelemente (84,85) aufweist, wobei jedes Gleitlagerelement (84,85) eine Durchgangsöffnung (86) und eine Aufnahmeöffnung (87) aufweist, wobei die Durchgangsöffnung (86) von einem der zwei Stäbe (82,83) durchsetzt ist und die Aufnahmeöffnung (87) den anderen Stab (82,83) aufnimmt.

3. Vorrichtung nach Anspruch 2, **dadurch gekennzeichnet, dass** in den Aufnahmeöffnungen (87) Enden der Stäbe (82,83) drehfest und fixiert gehalten sind.

4. Vorrichtung nach Anspruch 1, **dadurch gekennzeichnet, dass** die Stäbe (82,83) einen nicht kreisförmigen Querschnitt aufweisen.

5. Vorrichtung nach Anspruch 4, **dadurch gekennzeichnet, dass** der Querschnitt der Stäbe (82,83) eine ovale oder runde Form aufweist, welche mit mindestens einer nach aussen vorstehenden Nase (82',83') versehen ist.

6. Vorrichtung nach Anspruch 5, **dadurch gekennzeichnet, dass** zwei diagonal voneinander angeordnete Nasen (82',83') vorhanden sind, welche sich in Form je eines Keilprofiles über mindestens annähernd die gesamte Länge des Stabes (82,83) erstrecken.

7. Vorrichtung nach Anspruch 1, **dadurch gekennzeichnet, dass** die Gleitlagerelemente (84,85) Lager aufweisen mit einer Länge, welche mindestens annähernd dem Durchmesser der sie durchsetzenden Stäbe (82,83) entspricht.

8. Vorrichtung nach Anspruch 1, **dadurch gekennzeichnet, dass** die zwei Stäbe (82,83) in einem Abstand zueinander angeordnet sind, welcher annähernd dem Durchmesser eines Stabes (82,83) entspricht.

9. Vorrichtung nach Anspruch 1, **dadurch gekennzeichnet, dass** der erste und zweite Stab (82,83) mindestens bis auf ihre Länge identisch ausgebildet sind und dass die Gleitlagerelemente (84,85) identisch ausgebildet sind.

10. Delta-Roboter zum Bewegen eines Gegenstandes in einem dreidimensionalen Raum
mit einem Basiselement (1),
mit einem bewegbaren Trägerelement (5), an welchem ein Greifelement (6) angeordnet ist,
mit mehreren motorisch angetriebenen, bewegbaren Steuerarmen (3) und
mit einer längenveränderbaren Achse (8),
wobei die Steuerarme (3) und die längenveränderbare Achse (8) mit entgegengesetzten Enden mit dem Basiselement (1) und mit dem Trägerelement (5) verbunden sind, wobei die längenveränderbare Achse (8) eine Vorrichtung zur Übertragung von Drehmomenten bildet,
**dadurch gekennzeichnet, dass**
die Vorrichtung gemäss den Merkmalen einer der Patentansprüche 1-9 ausgebildet ist.

## Claims

1. Changeable-length apparatus for transmitting torques, comprising:
a first bar (82) and a second bar (83), it being possible for the first and the second bars (82, 83) to be displaced parallel to one another in a guided manner, and
having articulation heads (80, 81) for leading in an incoming torque and for leading out an outgoing torque, a first articulation head (80) being connected to the first bar (82) and a second articulation head (81) being connected to the second bar (83),
**characterized in that**
the first and second bars (82, 83) are arranged such that the incoming torque runs in a direction which is parallel to, but offset from, the direction of the outgoing torque, it being possible for the incoming torque to be transmitted from the first bar (82), via a slide bearing of rotationally fixed design (84, 85), to the second bar (83).

2. Apparatus according to Claim 1, **characterized in that** the slide bearing has two slide-bearing elements (84, 85), each slide-bearing element (84, 85) having a through-passage opening (86) and an accommodating opening (87), the through-passage opening (86) having one of the two bars (82, 83) passing through it and the accommodating opening (87) accommodating the other bar (82, 83).

3. Apparatus according to Claim 2, **characterized in that** ends of the bars (82, 83) are retained in a (rotationally) fixed manner in the accommodating openings (87).

4. Apparatus according to Claim 1, **characterized in that** the bars (82, 83) have a non-circular cross section.

5. Apparatus according to Claim 4, **characterized in that** the cross section of the bars (82, 83) is of oval or round shape, which is provided with at least one outwardly projecting nose (82', 83').

6. Apparatus according to Claim 5, **characterized in that** there are provided two diagonally opposite noses (82', 83') which each extend, in the form of a wedge profile, over at least more or less the entire length of the bar (82, 83).

7. Apparatus according to claim 1, **characterized in that** the slide-bearing elements (84, 85) have bearings of a length which corresponds at least more or less to the diameter of the bars (82, 83) passing through them.

8. Apparatus according to Claim 1, **characterized in that** the two bars (82, 83) are spaced apart from one another by a distance which corresponds more or less to the diameter of one bar (82, 83).

9. Apparatus according to Claim 1, **characterized in that** the first and second bars (82, 83), at least apart from their length, are of identical design, and wherein the slide-bearing elements (84, 85) are of identical design.

10. Delta robot for moving an object in three dimensions,
having a basic element (1),
having a moveable carrier element (5), on which a gripper element (6) is arranged,
having a plurality of motor-driven, moveable control arms (3), and
having a changeable-length axle (8),
the control arms (3) and the changeable-length axle (8) being connected, by way of opposite ends, to the basic element (1) and to the carrier element (5), and the changeable-length axle (8) forming an apparatus for transmitting torques,
**characterized in that**
the apparatus is designed in accordance with the features of one of Patent Claims 1-9.

## Revendications

1. Dispositif télescopique de transmission de couple comprenant :
- une première barre (82) et une seconde barre (83), la première et la seconde barre (82, 83) étant coulissantes l'une par rapport à l'autre et guidées parallèlement et
- des têtes d'articulation (80, 81) pour recevoir un couple entrant et fournir un couple sortant,
la première tête d'articulation (80) étant reliée à la première barre (82) et la seconde tête d'articulation (81) étant reliée à la seconde barre (83),
**caractérisé en ce que**
la première et la seconde barre (82, 83) sont disposées pour que le couple entrant présente une direction décalée parallèlement en direction du couple sortant et le couple entrant est transmis de la première barre (82) par un palier lisse (84, 85) rigide en torsion à la seconde barre (83).

2. Dispositif selon la revendication 1,
**caractérisé en ce que**
le palier lisse comporte deux éléments de palier lisse (84, 85), chaque élément de palier lisse (84, 85) ayant un orifice traversant (86) et un orifice de réception (87),
l'orifice traversant (86) étant traversé par l'une des deux barres (82, 83) et l'orifice de réception (87) recevant l'autre barre (82, 83).

3. Dispositif selon la revendication 2,
**caractérisé en ce que**
les extrémités des barres (82, 83) sont tenues solidairement en rotation et de façon bloquée dans les orifices de réception (87).

4. Dispositif selon la revendication 1,
**caractérisé en ce que**
les barres (82, 83) ont une section non circulaire.

5. Dispositif selon la revendication 4,
**caractérisé en ce que**
la section des barres (82, 83) est une forme ovale ou ronde ayant au moins un bec en saillie (82', 83').

6. Dispositif selon la revendication 5,
**caractérisé par**
deux becs (82', 83') disposés en diagonale et qui s'étendent chacune sous la forme d'un profil en coin sur au moins pratiquement toute la longueur de la barre (82, 83).

7. Dispositif selon la revendication 1,
**caractérisé en ce que**
les éléments de palier lisse (84, 85) ont des appuis d'une longueur correspondant au moins sensiblement au diamètre des barres (82, 83) qui les traversent.

8. Dispositif selon la revendication 1,
**caractérisé en ce que**
les deux barres (82, 83) sont distantes l'une de l'autre d'une distance qui correspond sensiblement au diamètre d'une barre (82, 83).

9. Dispositif selon la revendication 1,
**caractérisé en ce que**
la première et la seconde barre (82, 83) sont identiques au moins pour leur longueur et les éléments de palier lisse (84, 85) sont identiques.

10. Robot delta pour déplacer un objet dans un espace en trois dimensions, comprenant :
- un élément de base (1),
- un élément de support (5) mobile muni d'un élément de prise (6),
- plusieurs bras de commande (3) mobiles entraînés par moteur et
- un axe (8) de longueur variable,
- les bras de commande (3) et l'axe (8) de longueur variable étant reliés par les extrémités opposées à l'élément de base (1) et à l'élément de support (5),
l'axe de longueur variable (8) constituant un dispositif pour transmettre des couples,
**caractérisé en ce que**
le dispositif est réalisé selon les caractéristiques des revendications 1 à 9.
